# EUROPÄISCHE PATENTANMELDUNG

(11) **EP 4 671 578 A1**
(43) Veröffentlichungstag der Anmeldung: **31.12.2025**
(21) Anmeldenummer: 25185122.6
(22) Anmeldetag: 25.06.2025
(51) Int. Cl.: F16K 7/12, F16K 27/02

(54) **SPANNBAUGRUPPE, PROZESSVENTIL UND VERFAHREN ZUR MONTAGE, DEMONTAGE UND ZUM TAUSCH VON VENTILMEMBRANEN**

(30) Priorität: 27.06.2024 DE 102024118251
(71) Anmelder: GEMÜ Gebr. Müller Apparatebau GmbH & Co. Kommanditgesellschaft, 74653 Ingelfingen (DE)
(72) Erfinder: Bauer, Maximilian, 74670 Forchtenberg (DE)
(74) Vertreter: DREISS Patentanwälte PartG mbB

(57) **Zusammenfassung**

Es wird eine Spannbaugruppe (100) für ein Prozessventil (2) gezeigt. Diese umfasst: ein Gehäuse (102) umfassend wenigstens eine Pneumatikkammer (104a, 104b) und eine Schnittstelle (106) zur lösbaren Verbindung mit einem Ventilkörper (200); wenigstens ein Federelement (108), welches sich an dem Gehäuse (102) abstützt und dazu eingerichtet ist, eine Spanneinheit (110) in Richtung des Ventilkörpers (200) zu drücken; und die Spanneinheit (110), welche umfasst: wenigstens einen Spannkolben (114a, 114b), welcher in der wenigstens einen Pneumatikkammer (104a, 104b) beweglich angeordnet ist, wobei der wenigstens eine Spannkolben (114a, 114b) die zugeordnete Pneumatikkammer (104a, 104b) in einen Entlüftungsbereich (116a, 116b) und einen Druckluftbereich (118a, 118b) trennt; und einen Spannabschnitt (120), welcher dazu eingerichtet ist, einen lateralen Außenbund (302) einer Ventilmembran (300) des Prozessventils (2) zwischen dem Spannabschnitt (120) und dem Ventilkörper (200) zu verklemmen.

## Beschreibung

Die Erfindung betrifft Fortschritte im Bereich der Prozessventiltechnik.

Die Probleme des Standes der Technik werden durch eine Spannbaugruppe gemäß dem Anspruch 1, durch ein Prozessventil gemäß einem weiteren Anspruch sowie durch Verfahren zur Montage, Demontage und zum Tausch von Ventilmembranen gelöst.

Ein Aspekt der Beschreibung betrifft eine Spannbaugruppe für ein Prozessventil umfassend: ein Gehäuse umfassend wenigstens eine Pneumatikkammer und eine Schnittstelle zur lösbaren Verbindung mit einem Ventilkörper; wenigstens ein Federelement, welches sich an dem Gehäuse abstützt und dazu eingerichtet ist, eine Spanneinheit in Richtung des Ventilkörpers zu drücken; und die Spanneinheit, welche umfasst: wenigstens einen Spannkolben, welcher in der wenigstens einen Pneumatikkammer beweglich angeordnet ist, wobei der wenigstens eine Spannkolben die zugeordnete Pneumatikkammer in einen Entlüftungsbereich und einen Druckluftbereich trennt; und einen Spannabschnitt, welcher dazu eingerichtet ist, einen lateralen Außenbund einer Ventilmembran des Prozessventils zwischen dem Spannabschnitt und dem Ventilkörper zu verklemmen.

Vorteilhaft kann die Wartung des Prozessventils und der Austausch der Ventilmembran werkzeuglos erfolgen. Dadurch reduziert sich die Montagezeit. Zudem wird die Wahrscheinlichkeit einer Fehlmontage reduziert, da der Spann- und Entspannprozess des lateralen Außenbunds der Ventilmembran definiert erfolgt.

Durch das wenigstens eine Federelement wird zudem eine definierte dauerhafte Spannkraft bereitgestellt, die ohne Druckluftbeaufschlagung des Druckluftbereichs die Verspannung des Außenbundes der Ventilmembran sicherstellt.

Folglich verbessern sich die Montageeigenschaften, Montagefehler werden reduziert. Standzeiten der Prozessanlage werden reduziert. Die Betriebssicherheit der Prozessanlage wird erhöht.

Ein vorteilhaftes Beispiel zeichnet sich dadurch aus, dass das Gehäuse eine Mehrzahl von Pneumatikkammern umfasst, wobei die Spanneinheit eine Mehrzahl von Spannkolben umfasst, welche in einer jeweiligen der Pneumatikkammern angeordnet sind.

Die gleichwirkenden Spannkolben führen zwar zu einer etwas höheren Bauform, erlauben aber, dass der Durchmesser verringert wird und mit einem in der Prozessanlage verfügbaren Betriebsdruck die Entspannung des lateralen Außenbundes herbeigeführt werden kann.

Ein vorteilhaftes Beispiel zeichnet sich dadurch aus, dass ein im Gehäuse verlaufender Druckluft-Kanal die Druckluftbereiche der Pneumatikkammern luftführend miteinander verbindet.

Vorteilhaft wirken die Spannkolben bei Druckluftaktivierung in die gleiche Richtung und bewegen die Spanneinheit von dem lateralen Außenbund der Ventilmembran weg.

Ein vorteilhaftes Beispiel zeichnet sich dadurch aus, dass eine Steuereinheit dazu eingerichtet ist, in Abhängigkeit von einem empfangenen Entspannsignal Druckluft in den Druckluftbereich der wenigstens einen Pneumatikkammer einzuleiten, um den Spannabschnitt von dem lateralen Außenbund der Ventilmembran zu lösen oder zumindest eine zuvor anliegende Spannkraft zu reduzieren.

Vorteilhaft kann die vorhandene Druckluftversorgung für die Pneumatikantriebe auch für den Betrieb der Spannbaugruppe verwendet werden. Das Entspannsignal wird beispielsweise in der Nähe der Spannbaugruppe generiert, beispielsweise durch einen durch den Monteur erreichbaren Druckknopf an der Steuereinheit mit optischer oder akustischer Rückmeldung für den Monteur.

Ein vorteilhaftes Beispiel zeichnet sich dadurch aus, dass ein pneumatisches Rückschlagventil in einer Druckluftzuführung des Druckluftbereichs der wenigstens einen Pneumatikkammer angeordnet ist, wobei das pneumatische Rückschlagventil einen Fluss von Luft in Richtung des Druckluftbereichs freigibt, wenn der Druck im Druckluftbereich geringer ist als in einem Einlassbereich des Rückschlagventils, wobei das pneumatische Rückschlagventil einen Fluss von Luft aus Richtung des Druckluftbereichs blockiert oder verringert, wenn der Druck im Druckluftbereich höher ist als in einem Einlassbereich des Rückschlagventils.

Fällt der Betriebsdruck in der Druckluftzuführung ungewollt ab, so sorgt das Rückschlagventil dafür, dass der Druck im Druckluftbereich nicht schlagartig abnimmt. Vielmehr sorgt der noch vorhandene Druck im Druckluftbereich der Pneumatikkammer dafür, dass die so noch vorhandene Gegenkraft, welche der Federkraft des wenigstens einen Federelements entgegenwirkt nicht sofort abfällt. Dies hat den Vorteil, dass es zu keiner ungewollt ruckartigen Bewegung der Spanneinheit kommt. So wird die Arbeitssicherheit für den Monteur gewährleistet.

Ein vorteilhaftes Beispiel zeichnet sich dadurch aus, dass die Spannbaugruppe eine Durchgangsöffnung umfasst, welche entlang einer Stellachse durch die Spannbaugruppe verläuft.

Vorteilhaft kann damit eine Antriebsstange, welche mit einem Ventilantrieb verbunden ist, durch die Spannbaugruppe hindurchgeführt werden.

Ein vorteilhaftes Beispiel zeichnet sich dadurch aus, dass das wenigstens eine Federelement eine oder mehrere Tellerfedern umfasst.

Vorteilhaft kann durch die Verspannung mittels Tellerfedern eine hohe Vibrationsfestigkeit des Verschlusses, also der Dichtheit nach außen im Bereich des lateralen Außenbundes der Ventilmembran erfolgen.

Ein vorteilhaftes Beispiel zeichnet sich dadurch aus, dass der Entlüftungsbereich der wenigstens einen Pneumatikkammer über eine in das Gehäuse eingebrachte Drossel mit dem Außenbereich des Gehäuses verbunden ist.

Der Entlüftungsbereich hat eine Verbindung zur Atmosphäre, also zum Atmosphärendruck. Die Drossel ermöglicht den Druckausgleich und die gedämpfte Rückstellung des Spannkolbens, wenn die Druckluft abgelassen wird. Mit der gedämpften Rückstellung ist gemeint, dass die Atmosphärenluft gedrosselt in den Entlüftungsbereich einströmt und somit eine Gegenkraft zu der Federkraft des wenigstens einen Federelements bereitstellt.

Ein zweiter Aspekt der Beschreibung betrifft ein Prozessventil umfassend die Spannbaugruppe gemäß dem ersten Aspekt, wobei die Spannbaugruppe zwischen einem Ventilantrieb und dem Ventilkörper angeordnet ist.

Ein vorteilhaftes Beispiel zeichnet sich dadurch aus, dass eine von dem Ventilantrieb angetriebene Antriebsstange durch die Spannbaugruppe geführt ist und mit der Ventilmembran zu deren Bewegung verbunden ist.

Ein vorteilhaftes Beispiel zeichnet sich dadurch aus, dass eine von dem Ventilantrieb angetriebene Antriebsstange durch die Spannbaugruppe und durch die Ventilmembran führt und mit einem Absperrmittel zu dessen Bewegung verbunden ist.

Ein dritter Aspekt der Beschreibung betrifft ein Verfahren zur Demontage eines Absperrkörpers insbesondere einer Ventilmembran, eines Prozessventils gemäß dem zweiten Aspekt, wobei der Ventilkörper in einem Ausgangszustand der Demontage mit der Spannbaugruppe verbunden ist, und wobei der Absperrkörper, insbesondere die Ventilmembran, in dem Ausgangszustand mit der Antriebsstange verbunden ist, das Verfahren umfassend: Bewegen der Spanneinheit der Spannbaugruppe in eine Entspannposition durch Bereitstellung von Druckluft in dem Druckluftbereich der wenigstens einen Pneumatikkammer; Lösen der Verbindung zwischen der Spannbaugruppe und dem Ventilkörper; und Lösen der Verbindung zwischen dem Absperrkörper, insbesondere der Ventilmembran, und der Antriebsstange.

Ein vierter Aspekt der Beschreibung betrifft ein Verfahren zur Montage eines Absperrkörpers insbesondere einer Ventilmembran, des Prozessventils gemäß dem zweiten Aspekt, wobei der Ventilkörper in einem Ausgangszustand der Montage nicht mit der Spannbaugruppe verbunden ist, das Verfahren umfassend: Bewegen der Spanneinheit der Spannbaugruppe in eine Entspannposition durch Bereitstellung von Druckluft in dem Druckluftbereich der wenigstens einen Pneumatikkammer; Verbinden des Absperrkörpers, insbesondere der Ventilmembran, und der Antriebsstange; Verbinden des Ventilkörpers und der Spannbaugruppe; und Bewegen der Spanneinheit der Spannbaugruppe in eine Verspannposition durch Druckverringerung in dem Druckluftbereich der wenigstens einen Pneumatikkammer.

Ein fünfter Aspekt der Beschreibung betrifft ein Verfahren zum Tausch eines Absperrkörpers insbesondere einer Ventilmembran, eines Prozessventils, das Verfahren umfassend: Demontieren eines im Prozessventil verbauten Absperrkörpers, insbesondere einer im Prozessventil verbauten Ventilmembran, gemäß dem dritten Aspekt; und sich an die Demontage anschließendes Montieren eines weiteren Absperrkörpers, insbesondere einer weiteren Ventilmembran, gemäß dem vierten Aspekt.

In der Zeichnung zeigen:
- Fig. 1: ein Prozessventil in einer perspektivischen Draufsicht;
- Fig. 2: einen Schnitt xz des Prozessventils aus Figur 1;
- Fig. 3: einen Schnitt yz des Prozessventils aus Figur 1; und
- Fig. 4: ein schematisches Ablaufdiagramm zum Tausch einer Ventilmembran.

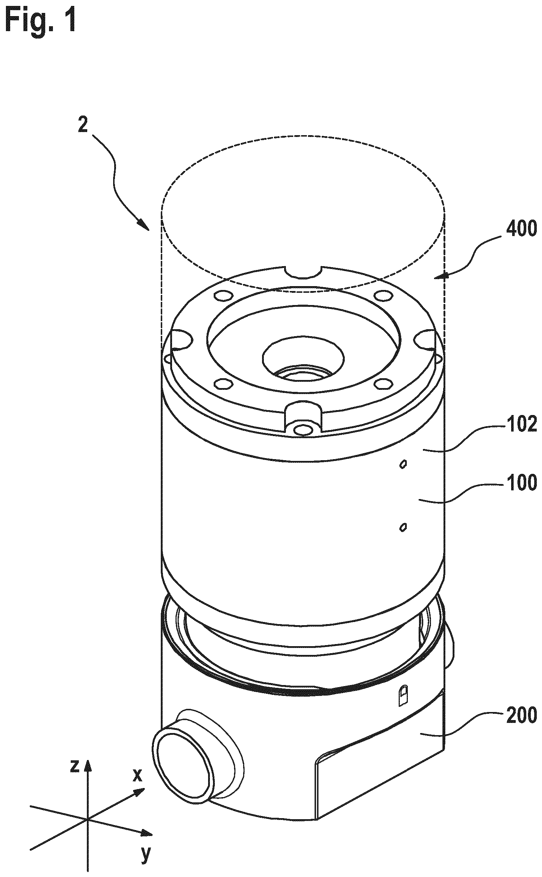

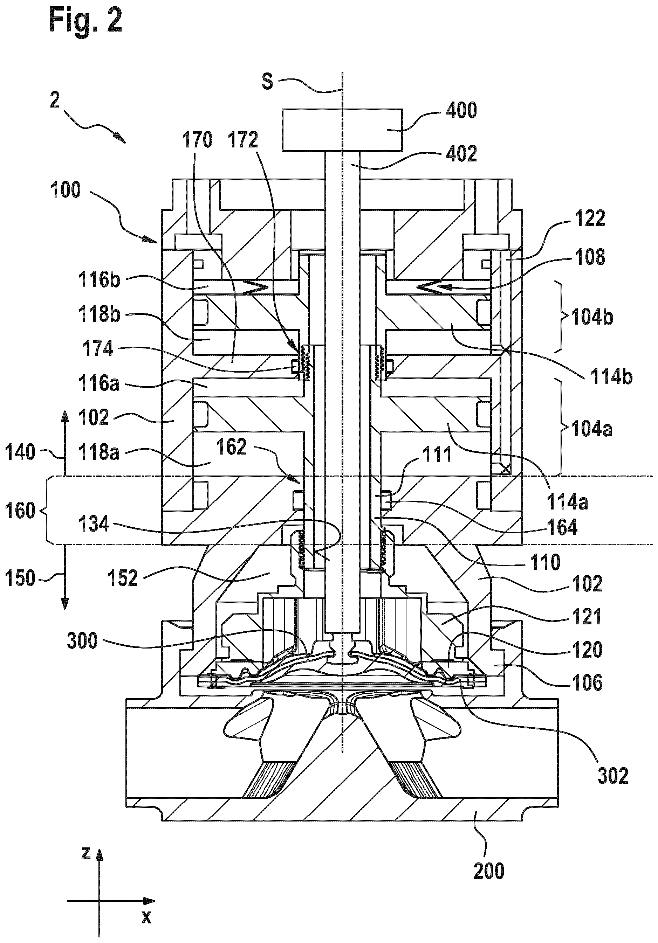

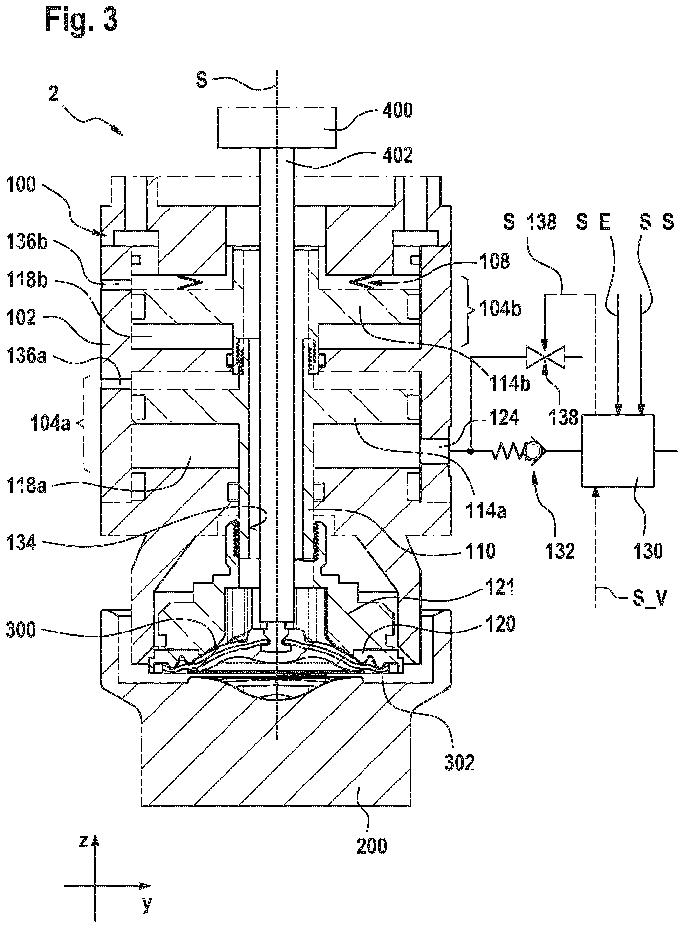

Ein Prozessventil 2 ist in den Figuren 1 bis 3 gezeigt. Eine Spannbaugruppe 100 für das Prozessventil 2 umfasst ein Gehäuse 102 umfassend wenigstens eine Pneumatikkammer 104a, 104b. Das Gehäuse 102 umfasst eine Schnittstelle 106 zur starren Verbindung mit einem Ventilkörper 200.

Im Beispiel ist die Schnittstelle 106 Teil einer Bajonett-artigen Verbindung zwischen der Spannbaugruppe 100 und dem Ventilkörper 200, wobei eine laterale Nase der Schnittstelle 106 nach einer Verdrehung des Ventilkörpers 200 und der Spannbaugruppe 100 in einen Hinterschnitt des Ventilkörpers 200 eingreift.

Die Spannbaugruppe 100 umfasst eine Durchgangsöffnung 134, welche entlang einer Stellachse S durch die Spannbaugruppe 100 verläuft.

Wenigstens ein Federelement 108 stützt sich an dem Gehäuse 102 ab und ist dazu eingerichtet, eine Spanneinheit 110 in Richtung des Ventilkörpers 200 zu drücken.

Im gezeigten Beispiel umfasst das wenigstens eine Federelement 108 eine oder mehrere Tellerfedern. Selbstverständlich sind auch andere Federelemente 108 denkbar, wie beispielsweise eine Druckfeder.

Die Spanneinheit 110 umfasst wenigstens einen Spannkolben 114a, 114b, welcher in der wenigstens einen Pneumatikkammer 104a, 104b beweglich angeordnet ist, wobei der wenigstens eine Spannkolben 114a, 114b die zugeordnete Pneumatikkammer 104a, 104b in einen von einem Spannabschnitt 120 abgewandten Entlüftungsbereich 116a, 116b und einen dem Spannabschnitt 120 zugewandten Druckluftbereich 118a, 118b trennt. Des Weiteren umfasst die Spanneinheit 110 den Spannabschnitt 120, welcher dazu eingerichtet ist, einen lateralen Außenbund 302 einer Ventilmembran 300 des Prozessventils 2 zwischen dem Spannabschnitt 120 und dem Ventilkörper 200 zu verklemmen.

Der Spannabschnitt 120 ist vorliegend kreisringförmig ausgebildet und umfasst eine membranseitige Konturierung, um den Außenbund 302 festzulegen bzw. sich in den Außenbund 302 einzugraben.

Eine Spannbüchse 121 ist starr mit einem Kolbenabschnitt 123 verbunden, welcher den wenigstens einen Spannkolben 114a, 114b umfasst. Die Spannbüchse 121 leitet die Kraft, welche von dem wenigstens einen Federelement 108 und dem wenigstens einen Spannkolben 114a, 114b erzeugt wird, in den Spannabschnitt 120 ein.

Im vorliegenden Beispiel ist der Spannabschnitt 120 nicht mit der Spannbüchse 121 verbunden. Vielmehr ist der Spannabschnitt 120 als Kreisring ausgebildet und formschlüssig zwischen dem Gehäuse 102 und dem Ventilkörper 200 aufgenommen. Der Spannabschnitt 120 wird von der Spannbüchse 121 mit der Spannkraft beaufschlagt. Der Vorteil des Spannabschnitts 120 als Einlegeteil ist, dass hier unterschiedliche Geometrien der Membrane berücksichtigt werden können und so ein modularer Aufbau des Prozessventils 2 realisiert werden kann.

In einem Beispiel ist der Spannabschnitt 120 starr mit der Spannbüchse 121 oder dem wenigstens einen Spannkolben 114a, 114b verbunden. Der Vorteil eines einteiligen Bauteils mit der Spannbüchse 121, dem Spannabschnitt 120 und dem wenigstens einen Spannkolben 114a, 114b liegt in der Reduktion der Bauteile und der schon vorhandenen Befestigung an der Spanneinheit 110.

Der Spannabschnitt 120 kann also als Einlegeteil ausgelegt werden oder als ein Teil in insbesondere starrer Verbindung mit der Spannbüchse 121 ausgeführt sein.

Die Spannbüchse 121 und/oder der Spannabschnitt 120 ist/sind gegen eine rotatorische Verdrehung um die Stellachse S gesichert, insbesondere durch einen formschlüssigen Eingriff in das Gehäuse 102. Vorteilhaft wird dadurch eine Scherbelastung des Außenbundes 302 der Ventilmembran 300 in Umfangsrichtung reduziert oder verhindert.

Der Spannabschnitt 120 verspannt in verspanntem Zustand nicht nur die Ventilmembran 300 zwischen sich und dem Ventilkörper 200. Zusätzlich liegt der Spannabschnitt 120 in dem verspannten Zustand mit seinem lateralen Außenbund an dem Ventilkörper 200 an.

Der Spannabschnitt 120 der Spanneinheit 110 ist also dazu eingerichtet, den lateralen Außenbund 302 der Ventilmembran 300 des Prozessventils 2 zwischen dem Spannabschnitt 120 und dem Ventilkörper 200 zu verklemmen, indem eine Spannkraft, welche von dem wenigstens einen Federelement 108 bereitgestellt wird, in den Spannabschnitt 120 eingeleitet wird.

Das Federelement 108 stützt sich direkt an dem Gehäuse 102 oder einem starr mit dem Gehäuse 102 verbundenen Element ab.

Der Spannabschnitt 120 der Spanneinheit 110 ist weitergehend dazu eingerichtet, die Verklemmung des lateralen Außenbunds 302 der Ventilmembran 300 des Prozessventils 2 zwischen dem Spannabschnitt 120 und dem Ventilkörper 200 zu lösen, sobald ein ausreichender Luftdruck in dem wenigstens einen Druckluftbereich 118a, 118b dafür sorgt, dass eine Gegenkraft zu der Federkraft aufgebaut wird und die Spanneinheit 110 von der Ventilmembran 300 wegbewegt wird.

Das Gehäuse 102 umfasst im Beispiel eine Mehrzahl von Pneumatikkammern 104a, 104b, wobei die Spanneinheit 110 eine Mehrzahl von Spannkolben 114a, 114b umfasst, welche in einer jeweiligen der Pneumatikkammern 104a, 104b angeordnet sind. Selbstverständlich ist alternativ denkbar, dass nur eine einzige Pneumatikkammer 104a vorhanden ist und entsprechend nur ein einziger Spannkolben 114a.

Ein im Gehäuse 102 verlaufender Druckluft-Kanal 122 verbindet die Druckluftbereiche 118a, 118b der Pneumatikkammern 104a, 104b luftführend miteinander. Ein Druckluft-Anschluss 124 ist lateral am Gehäuse 102 angeordnet und führt in den ersten Druckluftbereich 118a.

Eine Steuereinheit 130 ist dazu eingerichtet, in Abhängigkeit von einem empfangenen Entspannsignal S_E Druckluft in den Druckluftbereich 118a, 118b der wenigstens einen Pneumatikkammer 104a, 104b einzuleiten, um den Spannabschnitt 120 von dem lateralen Außenbund 302 der Ventilmembran 300 abzuheben bzw. die auf den Außenbund wirkende Spannkraft zu reduzieren.

Um die Spannung wieder auf den Außenbund 302 der Ventilmembran 300 aufzubringen, wird ein Spannsignal S_S der Steuereinheit zugeführt. In Abhängigkeit von dem Spannsignal S_S wird der Druck in dem Druckluftbereich 118a, 118b der wenigstens einen Pneumatikkammer 104a, 104b reduziert, womit auch die Gegenkraft, die gegen die Federkraft wirkt, reduziert wird. Damit drückt das Federelement 108 die Spanneinheit 110 mit dem Spannabschnitt 120 auf den lateralen Bund 302 der Ventilmembran 300.

Ein pneumatisches Rückschlagventil 132 ist in einer Druckluftzuführung des Druckluftbereichs 118a, 118b der wenigstens einen Pneumatikkammer 104a, 104b angeordnet. Das pneumatische Rückschlagventil 132 gibt einen Fluss von Luft in Richtung des Druckluftbereichs 118a, 118b frei, wenn der Druck im Druckluftbereich 118a, 118b geringer ist als in einem Einlassbereich des Rückschlagventils 132. Das pneumatische Rückschlagventil 132 blockiert oder verringert einen Fluss von Luft aus Richtung des Druckluftbereichs 118a, 118b, wenn der Druck im Druckluftbereich 118a, 118b höher ist als in einem Einlassbereich des Rückschlagventils 132.

Zwischen dem Rückschlagventil 132 und dem Druckluftanschluss 124 ist ein Druckluftabgriff vorgesehen, der zu einem Ablass-Ventil 138 führt. Das Ablass-Ventil 138 ist auf der vom Druckluftabgriff abgewandten Seite offen, also mit Atmosphärendruck verbunden.

Die Steuereinheit 130 erhält ein Verriegelungssignal S_V, welches eine Verriegelung der Spannbaugruppe 100 mit dem Ventilkörper 200 indiziert. Das Verriegelungssignal S_V indiziert beispielsweise eine relative Lage der Spannbaugruppe 100 und des Ventilkörpers 200, insbesondere, ob die Bajonett-artige Verbindung zwischen der Spannbaugruppe 100 und dem Ventilkörper 200 so verriegelt ist, dass diese Verbindung zugbelastet werden darf, also eine Verspannung der Ventilmembran 300 erfolgen kann.

Ausgehend von einem verspannten Zustand der Ventilmembran 300 empfängt die Steuereinheit 130 das Entspannsignal S_E, um den Außenbund 302 der Ventilmembran 300 zu entspannen. Indiziert das Verriegelungssignal S_V, dass die Spannbaugruppe 100 und der Ventilkörper 200 korrekt miteinander verriegelt sind, und liegt das Entspannsignal S_E vor, dann erzeugt die Steuereinheit 130 ein Signal S_138, welches das Ablass-Ventil 138 schließt und damit Druckluft aus einer Druckluftversorgung 139 in den Druckluftbereich 118a-b einbringt. Das sorgt dafür, dass die auf die Ventilmembran 300 wirkende Spannkraft reduziert wird und ein Membranwechsel durchgeführt werden kann.

Die Steuereinheit 130 zeigt dem Monteur das Erreichen des entspannten Zustands der Ventilmembran 300 durch ein erzeugtes optisches und/oder akustisches Signal an. Damit kann die Spannbaugruppe 100 von dem Ventilkörper 200 entfernt werden.

Nach einem Membranwechsel wird die neu eingebrachte Ventilmembran 300 wieder verspannt. Dazu wird zunächst die Spannbaugruppe 100 an dem Ventilkörper 200 angeordnet. Ausgehend von dem entspannten Zustand der Ventilmembran 300 empfängt die Steuereinheit 130 ein Verspannsignal S_S, um den Außenbund 302 der Ventilmembran 300 zu verspannen. Indiziert das Verriegelungssignal S_V, dass die Spannbaugruppe 100 und der Ventilkörper 200 miteinander verriegelt sind, und liegt das Verspannsignal S_S vor, dann erzeugt die Steuereinheit 130 das Signal S_138, welches das Ablass-Ventil 138 öffnet. Nach dem Öffnen des Ablassventils 138 wird die Druckluft aus dem wenigstens einen Druckluftbereich 118a-b abgelassen und die Federkraft bewirkt eine Verspannung des Außenbundes 302 der Ventilmembran 300.

Selbstverständlich ist auch eine Ausführung ohne das Rückschlagventil 132 und/oder das Ablass-Ventil 138 denkbar. Dann kann auch das Verriegelungssignal S_V entfallen.

Alternativ oder zusätzlich zu dem Rückschlagventil 132 kann auch eine Drossel in der Druckluftzuführung des Druckluftbereichs der Pneumatikkammer angeordnet sein.

Der Entlüftungsbereich 116a, 116b der wenigstens einen Pneumatikkammer 104a, 104b ist über eine in das Gehäuse 102 eingebrachte Drossel 136a, 136b mit dem Außenbereich des Gehäuses 102 verbunden.

Die Spannbaugruppe 100 ist zwischen einem Ventilantrieb 400 und dem Ventilkörper 200 angeordnet.

Im Beispiel ist eine von dem Ventilantrieb 400 angetriebene Antriebsstange 402 durch die Spannbaugruppe 100 geführt und mit der Ventilmembran 300 zu deren Bewegung verbunden. Durch Bewegen der Ventilmembran 300 auf einen Ventilsitz des Ventilkörpers zu, wird der Fluidstrom durch das Prozessventil 2 reduziert. Durch Bewegen der Ventilmembran 300 vom Ventilsitz weg, wird der Fluidstrom durch das Prozessventil 2 erhöht.

Alternativ zu dem gezeigten Beispiel der Ventilmembran 300 können Ventilmembran und Absperrkörper auch auseinanderfallen, was bedeutet, dass eine von dem Ventilantrieb 400 angetriebene Antriebsstange 402 durch die Spannbaugruppe 100 und durch die Ventilmembran führt und mit einem Absperrmittel zu dessen Bewegung verbunden ist.

Das Gehäuse 102 der Spannbaugruppe 102 ist in einen Pneumatikabschnitt 140 und einen Betätigungsabschnitt 150 aufgeteilt. Der Pneumatikabschnitt 140 umfasst die wenigstens eine Pneumatikkammer 140a-b. Der Betätigungsabschnitt 150 umfasst einen Aufnahmeraum 152 für die Spannbüchse 121 und den Spannabschnitt 120.

Der Pneumatikabschnitt 140 und der Betätigungsabschnitt 150 sind durch einen Zwischenabschnitt 160 miteinander verbunden. Der Zwischenabschnitt 160 umfasst einen Lagerabschnitt 162, der ein Axiallager für die Spanneinheit 110 bereitstellt.

Der Lagerabschnitt 162 umfasst eine ringförmige Nut 164 zur Aufnahme eines Dichtrings.

Ein Verbindungsabschnitt 111 der Spanneinheit 110 verbindet den wenigstens einen Spannkolben 114a-b und die Spannbüchse 121 miteinander. Der Verbindungsabschnitt 111 weist einen geringeren zur Stellachse S lotrechten Durchmesser auf als die Spannbüchse und der wenigstens eine Spannkolben 114a-b.

Der wenigstens eine Spannkolben 114a-b und die wenigstens eine Spannbüchse 121 sind durch den Verbindungsabschnitt 111 voneinander beabstandet.

Der Verbindungsabschnitt 111 verläuft durch den Zwischenabschnitt 160 und ist mittels des Lagerabschnitts 162 axial gelagert.

Ein weiterer Zwischenabschnitt 170 des Gehäuses 102 ist zwischen den beiden Pneumatikkammern 104a-b angeordnet. Der weitere Zwischenabschnitt 170 umfasst einen weiteren Lagerabschnitt 172 mit einer weiteren Innennut 174 zur Aufnahme eines Dichtrings.

Die Schnittstelle 106 wird unter Zug gesetzt und legt damit das Gehäuse 102 der Spannbaugruppe 100 zu dem Ventilkörper 200 fest, sobald Luftdruck aus dem wenigstens einen Druckluftbereich 118a, 118b reduziert wird und die Federkraft des wenigstens einen Federelements 108 den wenigstens einen Spannabschnitt 120 auf den Außenbund 302 der Ventilmembran drückt.

Somit wird eine starre Verbindung zwischen dem Gehäuse 102 der Spannbaugruppe 100 und dem Ventilkörper 200 durch ein Ablassen von Druckluft aus dem wenigstens einen Druckluftbereich 118a, 118b hergestellt. Der unter Druckluft gesetzte wenigstens eine Druckluftbereich 118a, 118b führt zu einem Lösen der starren Verbindung zwischen dem Gehäuse 102 der Spannbaugruppe 100 und dem Ventilkörper 200.

Am Beispiel der Bajonett-artigen Verbindung wird durch das Lösen der starren Verbindung eine relative Verdrehung der beiden Verbindungspartner Gehäuse 102 und Ventilkörper 200 ermöglicht, um die beiden Verbindungspartner voneinander zu trennen.

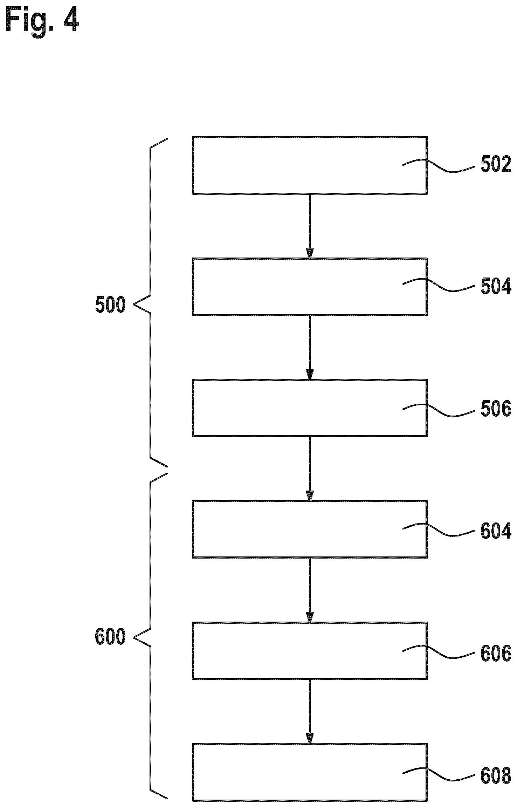

Figur 4 zeigt in einem schematischen Ablaufdiagramm wie eine Membran gewechselt wird. Dabei werden zum verbesserten Verständnis auch die Bezugszeichen aus den vorigen Figuren verwendet.

Das Verfahren gliedert sich in zwei Bereiche. In die Demontage 500 der verwendeten Ventilmembran 300 und die Montage 600 einer fabrikneuen Ventilmembran.

Der Ventilkörper 200 ist in einem Ausgangszustand der Demontage 500 mit der Spannbaugruppe 100 verbunden, wobei der Absperrkörper, insbesondere die Ventilmembran 300, in dem Ausgangszustand mit der Antriebsstange 402 verbunden ist. Die Demontage 500 umfasst ein Bewegen 502 der Spanneinheit 110 der Spannbaugruppe 100 in eine Entspannposition durch Bereitstellung von Druckluft in dem Druckluftbereich 118a, 118b wenigstens einen Pneumatikkammer 104a, 104b. Anschließend erfolgt ein Lösen 504 der Verbindung zwischen der Spannbaugruppe 100 und dem Ventilkörper 200. Anschließend erfolgt ein Lösen 506 der Verbindung zwischen dem Absperrkörper, insbesondere der Ventilmembran 300, und der Antriebsstange 402.

Der Ventilkörper 200 ist in einem Ausgangszustand der Montage 600 der fabrikneuen nicht mit der Spannbaugruppe 100 verbunden ist. Falls noch nicht erfolgt, erfolgt das Bewegen der Spanneinheit 110 der Spannbaugruppe 100 in die Entspannposition durch Bereitstellung von Druckluft in dem Druckluftbereich 118a, 118b der wenigstens einen Pneumatikkammer 104a, 104b.

Zur Montage 600 erfolgt ein Verbinden 604 des fabrikneuen Absperrkörpers, insbesondere der Ventilmembran 300, und der Antriebsstange 402. Anschließend erfolgt ein Verbinden 606 des Ventilkörpers 200 und der Spannbaugruppe 100. Anschließend erfolgt ein Bewegen 608 der Spanneinheit 110 der Spannbaugruppe 100 in eine Verspannposition durch Druckverringerung in dem Druckluftbereich 118a, 118b der wenigstens einen Pneumatikkammer 104a, 104b.

## Patentansprüche

1. Eine Spannbaugruppe (100) für ein Prozessventil (2) umfassend:
ein Gehäuse (102) umfassend wenigstens eine Pneumatikkammer (104a, 104b) und eine Schnittstelle (106) zur lösbaren Verbindung mit einem Ventilkörper (200);
wenigstens ein Federelement (108), welches sich an dem Gehäuse (102) abstützt und dazu eingerichtet ist, eine Spanneinheit (110) in Richtung des Ventilkörpers (200) zu drücken; und
die Spanneinheit (110), welche umfasst:
wenigstens einen Spannkolben (114a, 114b), welcher in der wenigstens einen Pneumatikkammer (104a, 104b) beweglich angeordnet ist, wobei der wenigstens eine Spannkolben (114a, 114b) die zugeordnete Pneumatikkammer (104a, 104b) in einen Entlüftungsbereich (116a, 116b) und einen Druckluftbereich (118a, 118b) trennt; und
einen Spannabschnitt (120), welcher dazu eingerichtet ist, einen lateralen Außenbund (302) einer Ventilmembran (300) des Prozessventils (2) zwischen dem Spannabschnitt (120) und dem Ventilkörper (200) zu verklemmen.

2. Die Spannbaugruppe (100) gemäß Anspruch 1, wobei das Gehäuse eine Mehrzahl von Pneumatikkammern (104a, 104b) umfasst, und wobei die Spanneinheit (110) eine Mehrzahl von Spannkolben (114a, 114b) umfasst, welche in einer jeweiligen der Pneumatikkammern (104a, 104b) angeordnet sind.

3. Die Spannbaugruppe (100) gemäß Anspruch 2, wobei ein im Gehäuse (102) verlaufender Druckluft-Kanal (122) die Druckluftbereiche (118a, 118b) der Pneumatikkammern (104a, 104b) luftführend miteinander verbindet.

4. Die Spannbaugruppe (100) gemäß einem der vorigen Ansprüche, wobei in einem Betriebszustand des Prozessventils (2) die Schnittstelle (106) unter Zugspannung steht, wobei in dem Betriebszustand des Prozessventils (2) die Spanneinheit (110) unter Druckspannung steht.

5. Die Spannbaugruppe (100) gemäß einem der vorigen Ansprüche umfassend eine Steuereinheit (130), welche dazu eingerichtet ist, in Abhängigkeit von einem empfangenen Entspannsignal (S_E) Druckluft in den Druckluftbereich (118a, 118b) der wenigstens einen Pneumatikkammer (104a, 104b) einzuleiten, um den Spannabschnitt (120) von dem lateralen Außenbund (302) der Ventilmembran (300) zu lösen oder zumindest eine zuvor anliegende Spannkraft zu reduzieren.

6. Die Spannbaugruppe (100) gemäß einem der vorigen Ansprüche, wobei ein pneumatisches Rückschlagventil (132) in einer Druckluftzuführung des Druckluftbereichs (118a, 118b) der wenigstens einen Pneumatikkammer (104a, 104b) angeordnet ist, wobei das pneumatische Rückschlagventil (132) einen Fluss von Luft in Richtung des Druckluftbereichs (118a, 118b) freigibt, wenn der Druck im Druckluftbereich (118a, 118b) geringer ist als in einem Einlassbereich des Rückschlagventils (132), und wobei das pneumatische Rückschlagventil (132) einen Fluss von Luft aus Richtung des Druckluftbereichs (118a, 118b) blockiert oder verringert, wenn der Druck im Druckluftbereich (118a, 118b) höher ist als in einem Einlassbereich des Rückschlagventils (132).

7. Die Spannbaugruppe (100) gemäß einem der vorigen Ansprüche, wobei die Spannbaugruppe (100) eine Durchgangsöffnung (134) umfasst, welche entlang einer Stellachse (S) durch die Spannbaugruppe (100) verläuft.

8. Die Spannbaugruppe (100) gemäß einem der vorigen Ansprüche, wobei das wenigstens eine Federelement (108) eine oder mehrere Tellerfedern umfasst.

9. Die Spannbaugruppe (100) gemäß einem der vorigen Ansprüche, wobei der Entlüftungsbereich (116a, 116b) der wenigstens einen Pneumatikkammer (104a, 104b) über eine in das Gehäuse (102) eingebrachte Drossel (136a, 136b) mit dem Außenbereich des Gehäuses (102) verbunden ist.

10. Ein Prozessventil (2) umfassend die Spannbaugruppe (100) gemäß einem der vorigen Ansprüche, wobei die Spannbaugruppe (100) zwischen einem Ventilantrieb (400) und dem Ventilkörper (200) angeordnet ist.

11. Das Prozessventil (2) gemäß dem vorigen Anspruch, wobei eine von dem Ventilantrieb (400) angetriebene Antriebsstange (402) durch die Spannbaugruppe (100) geführt ist und mit der Ventilmembran (300) zu deren Bewegung verbunden ist.

12. Das Prozessventil gemäß dem Anspruch 10 oder 11, wobei eine von dem Ventilantrieb (400) angetriebene Antriebsstange (402) durch die Spannbaugruppe (100) und durch die Ventilmembran führt und mit einem Absperrmittel zu dessen Bewegung verbunden ist.

13. Ein Verfahren zur Demontage eines Absperrkörpers, insbesondere einer Ventilmembran (300), eines Prozessventils (2) gemäß Anspruch 10, 11 oder 12, wobei der Ventilkörper (200) in einem Ausgangszustand der Demontage mit der Spannbaugruppe (100) verbunden ist, und wobei der Absperrkörper, insbesondere die Ventilmembran (300), in dem Ausgangszustand der Demontage mit der Antriebsstange (402) verbunden ist, das Verfahren umfassend:
Bewegen (502) der Spanneinheit (110) der Spannbaugruppe (100) in eine Entspannposition durch Bereitstellung von Druckluft in dem Druckluftbereich (118a, 118b) der wenigstens einen Pneumatikkammer (104a, 104b);
Lösen (504) der Verbindung zwischen der Spannbaugruppe (100) und dem Ventilkörper (200); und
Lösen (506) der Verbindung zwischen dem Absperrkörper, insbesondere der Ventilmembran (300), und der Antriebsstange (402).

14. Ein Verfahren zur Montage eines Absperrkörpers, insbesondere einer Ventilmembran (300), des Prozessventils (2) gemäß Anspruch 10 11, oder 12, wobei der Ventilkörper (200) in einem Ausgangszustand der Montage nicht mit der Spannbaugruppe (100) verbunden ist, das Verfahren umfassend:
Bewegen (602) der Spanneinheit (110) der Spannbaugruppe (100) in eine Entspannposition durch Bereitstellung von Druckluft in dem Druckluftbereich (118a, 118b) der wenigstens einen Pneumatikkammer (104a, 104b);
Verbinden (604) des Absperrkörpers, insbesondere der Ventilmembran (300), und der Antriebsstange (402);
Verbinden (606) des Ventilkörpers (200) und der Spannbaugruppe (100); und
Bewegen (608) der Spanneinheit (110) der Spannbaugruppe (100) in eine Verspannposition durch Druckverringerung in dem Druckluftbereich (118a, 118b) der wenigstens einen Pneumatikkammer (104a, 104b).

15. Ein Verfahren zum Tausch eines Absperrkörpers, insbesondere einer Ventilmembran (300), eines Prozessventils (2), das Verfahren umfassend:
Demontieren (500) eines im Prozessventil (2) verbauten Absperrkörpers, insbesondere einer im Prozessventil (2) verbauten Ventilmembran (300), gemäß dem Anspruch 13; und
sich an die Demontage anschließendes Montieren (600) eines weiteren Absperrkörpers, insbesondere einer weiteren Ventilmembran (300), gemäß dem Anspruch 14.
